# EUROPÄISCHE PATENTSCHRIFT

(11) **EP 0 832 735 B1**
(45) Veröffentlichungstag und Bekanntmachung des Hinweises auf die Patenterteilung: **15.12.2010**
(21) Anmeldenummer: 97116779.6
(22) Anmeldetag: 26.09.1997
(51) Int. Cl.: C09K 21/14, B32B 5/18, E04B 1/94

(54) **Brandgeschützte Verbundsysteme**
Fire-protected layered system
Système stratifié ignifuge

(30) Priorität: 27.09.1996 DE 19639842; 17.12.1996 DE 19652352
(43) Veröffentlichungstag der Anmeldung: 01.04.1998
(73) Patentinhaber: Dr. Wolman GmbH, 76547 Sinzheim (DE)
(72) Erfinder: Breuer, Michael, Dr., 76547 Sinzheim (DE); Seelmann-Eggebert, Hans-Peter, Dr., 67117 Limburgerhof (DE); Hohwiller, Frieder, 67098 Bad Dürkheim (DE); Hofmann, Klaus, 68775 Ketsch (DE); Fischer, Jürgen, Dr., 67117 Limburgerhof (DE)
(74) Vertreter: Vonend, Michael

(56) Entgegenhaltungen:
- EP-A- 0 009 109
- EP-A- 0 445 400
- EP-A- 0 694 574
- EP-A- 0 808 956
- WO-A-95/28531
- DE-A- 2 617 601
- DE-A- 4 135 678
- FR-A- 2 409 855
- GB-A- 2 253 588
- US-A- 4 366 204
- DATABASE WPI Section Ch, Week 199015 Derwent Publications Ltd., London, GB; Class A93, AN 1990-112453 XP002245052 & JP 02 063731 A (IG GIJUTSU KENKYUSHO KK) 5. März 1990 (1990-03-05)

## Beschreibung

Gegenstand der vorliegenden Erfindung sind brandgeschützte Verbundsysteme, enthaltend Schaumstoffplatten aus geschäumtem Polystyrol oder geschäumtem Polyurethan zwischen zwei Begrenzungsflächen, wobei Profile, Gewebe oder Netze in die Fugen zwischen den Schaumstoffplatten eingebracht sind, welche mit einer intumeszierenden Masse, die Blähgraphit oder die folgenden Komponenten
a) eine phosphorhaltige Stickstoffverbindung,
b) einen Polyalkohol,
c) ein Treibmittel und
d) gewünschtenfalls weitere Zusatzstoffe
enthält, getränkt oder beschichtet sind.

Weiterhin ist Gegenstand der vorliegenden Erfindung ein Verfahren zum Brandschutz von Verbundsystemen nach Anspruch 6. Schaumstoffenthaltende Verbundsysteme finden weite Verbreitung als Wärme- und Schallschutzisolierung, besonders an Gebäuden und in Fahrzeugen. Schaumstoffenthaltende Verbundsysteme (Sandwichteile) werden auch als tragende Fertigbauteile bei der Errichtung von Lagerhäusern, Kühlräumen oder Büro- und Wohncontainern eingesetzt. Da viele Schaumstoffe brennbar sind, können derartige Verbundsysteme im Brandfall zu Problemen führen. Dies gilt insbesondere für dicke Schaumstoffschichten von mehr als 8 cm Dicke. Die Schaumstoffe sind zwar in der Regel so in die Verbundsysteme eingebaut, daß weder Feuer noch große Mengen Luft direkt an die Schaumstoffe gelangen können, im Brandfall können thermoplastische Schaumstoffe jedoch zusammenschmelzen und die begrenzenden Wandflächen beschädigt werden, so daß auch ein Brand der Schaumstoffschicht nicht ausgeschlossen werden kann. Ein solcher Brand kann sich dann in dem Verbundsystem, also beispielsweise an der Gebäudeaußenfläche, ausbreiten.

Zum Brandschutz von brennbaren Gegenständen oder Gebäudeteilen ist es bisher üblich, die gefährdeten Oberflächen mit intumeszierenden Beschichtungen, beispielsweise Anstrichen oder Folien, zu versehen. Die Verwendung intumeszierender Massen im baulichen Brandschutz ist beispielsweise aus EP-A-694 574 bekannt. Zum Brandschutz von schaumstoffhaltigen Verbundsystemen ist eine solche Beschichtung jedoch wenig geeignet, da im Brandfall die Schaumstoffe schmelzen können und danach nicht mehr durch die Beschichtung eingeschlossen bzw. geschützt sind.

Die JP-A 02 63731 beschreibt eine Sandwichpanele, welche einen Schaumstoffkern zwischen zwei Metallplatten enthält. Zwischen mindestens einer Metallplatte und dem Schaumstoffkern befindet sich eine Klebeschicht, auf welche eine Schicht Blähgraphit aufgetragen ist, welche bei Hitzeeinwirkung eine carbonisierte Isolierschicht bildet. Die Aufgabe der vorliegenden Erfindung war es daher, brandgeschützte Verbundsysteme zu finden, in denen intumeszierende Bauelemente so eingesetzt werden, dass sie einen Brand wirksam verhindern können.

Demgemäß wurden die eingangs beschriebenen brandgeschützten Verbundsysteme sowie ein Verfahren zum Brandschutz derartiger Verbundsysteme entwickelt.

Unter Verbundsystemen mit einer Schaumstoffschicht zwischen zwei Begrenzungsflächen sollen hier alle Bausysteme verstanden werden, in denen Schaumstoffschichten durch Wände oder Deckschichten vom Außenraum abgetrennt sind.

Weite Verbreitung haben derartige Verbundsysteme beispielsweise als Wärmedämmverbundsysteme zur Wärmeisolierung von Gebäudeaußenwänden gefunden.

Unter der Fachbezeichnung Wärmedämm-Verbundsystem versteht man Dämmsysteme auf der Außenseite von Gebäudeaußenwänden, bei denen die Dämmplatten mit Klebemasse und ggf. mit zusätzlichen Dübeln oder mit einem Schienensystem befestigt werden und mit einer als Begrenzungsfläche wirkenden Putzschicht versehen werden. Zur Verhinderung von Spannungsrissen wird in die Putzschicht eine Gewebearmierung eingebettet.

Die witterungsabweisende Schlussbeschichtung kann aus Kunstharzputzen bestehen, die üblicherweise in einer Dicke bis 5 mm aufgebracht werden oder aus mineralischen Putzen in einer Dicke bis 20 mm. In speziellen Fällen werden auf die armierte Grundputzschicht auch sogenannte "Flachverblender" aufgeklebt, die eine mauerwerksähnliche Oberflächengestaltung ermöglichen. Derartige Dämmsysteme werden vermehrt zur Erfüllung der wärmeschutztechnischen Anforderungen an Gebäuden verwendet.

Ebenso kann die beidseitige Begrenzungsfläche aus Stahlblechen oder -folien bestehen. Solche Elemente werden vermehrt für Lagerhallen und zum Bau von Wohn- und Bürocontainern eingesetzt.

Weitere Verbundsysteme im Sinne der vorliegenden Erfindung sind z.B. solche, wie sie im Fahrzeugbau verwendet werden. Dort werden, beispielsweise im Wagon- und Flugzeugbau, zwischen Innen- und Außenwand häufig Schaumstoffschichten eingebaut, die der Wärme- und Schallisolierung dienen. In Kraftfahrzeugen werden Schaumstoffverbundsysteme oder entsprechende Bauteile beispielsweise im Innenbereich zum Personenaufprallschutz verwendet.

Weiterhin können auch Behälter aus erfindungsgemäßen wärmeisolierenden Verbundsystemen aufgebaut sein.

Als Schaumstoffe in den erfindungsgemäßen brandgeschützten Verbundsystemen kommen in Betracht geschäumtes Polystyrol oder Polyurethane.

Besonders weite Verbreitung und daher besondere Bedeutung hinsichtlich einer Brandschutzausrüstung haben Verbundsysteme, in denen die Schaumstoffschicht im wesentlichen aus Polystyrol, sogenanntem expandierten Polystyrol (EPS), besteht.

Weiterhin sind brandgeschützte Verbundsysteme zu nennen, in denen die Schaumstoffschicht im wesentlichen aus geschäumtem Polyurethan besteht.

Die dem Brandschutz dienenden Profile, Netze und Gewebe müssen so beschaffen sein, dass sie im Brandfall beim Schmelzen des Schaumstoffes ihre Position kaum verändern und auf diese Weise, nach entsprechender Temperatureinwirkung und dem Aufschäumen der Intumeszenzmasse, eine stabile Abschottung des dem Brand ausgesetzten Bereichs aufweisen. Als Materialien für die Profile, Netze oder Gewebe sind daher beispielsweise Metallbleche, Glasfasern oder auch thermostabile Kunststoffe, wie Hart-PVC, geeignet.

Die mit der Intumeszenzmasse versehenen Profile, Gewebe oder Netze sind in die Fugen zwischen den Schaumstoffplatten eingebracht. Diese Anordnung ist besonders effektiv und wirtschaftlich: Mit geringem Aufwand an Intumeszenzmaterial wird eine besonders wirkungsvolle Abschottung von Verbundsystembereichen im Brandfall erreicht. Dazu reicht z.B. das Anbringen eines entsprechenden schmalen Netzstreifens etwa in der Breite der Dämmplatte zwischen den Platten, insbesondere in den horizontalen Fugen.

Neben der Anordnung von Profilen, Netzen oder Gewebe in den Fugen hat sich insbesondere für Wärmedämmverbundsysteme auf Gebäudeoberflächen eine weitere Möglichkeit als vorteilhaft erwiesen. Dazu werden die Armierungsgewebe oder -netze zur Stabilisierung der Putzschicht mit einer intumeszierenden Masse getränkt oder beschichtet. Die Armierungsgewebe bestehen meist aus Glasfasermaterial oder Kunststoffen und lassen sich einfach mit Intumeszenzmassen beschichten. Die Gewebe oder Netze werden dann auf die Dämmplatten geklebt und dienen dann der Haftung des Putzes sowie der Verhinderung von Spannungsrissen im Putz und, im Fall der genannten Beschichtung, auch dem Brandschutz.

Geeignete Intumeszenzmassen, die zum Tränken oder Beschichten der Profile, Netze oder Gewebe oder zum Einarbeiten in entsprechende Verbundmaterialien verwendet werden können, sind bereits bekannt.

Als Intumeszenzmassen werden Materialien bezeichnet, die unter Hitzeeinwirkung aufschäumen und dabei einen isolierenden und hitzebeständigen Schaum ("Thermoschaum") bilden, der die darunter liegenden Flächen und Substrate vor der Feuer- und Hitzeeinwirkung schützt. Neben der klassischen Dreiermischung aus Kohlenstoffspender, Dehydrationsmittel und Treibmittel, z. B. Zucker, Ammoniumphosphat und Melamin, sind auch Zweikomponentensysteme entwickelt worden wie z. B. Melaminphosphat in Mischung mit Borsäure und zunehmend kommen auch Einkomponentenmaterialien zum Einsatz. Zu den letzteren zählen neben den altbekannten Alkalisilikaten "Wasserglas" auch Blähglimmer, Blähgraphit, Perlit, Rohvermiculit u.a.

Besonders geeignet sind intumeszierende Massen mit starkem Aufschäumverhalten und guter Witterungsbeständigkeit. Erfindungsgemäße Intumeszenzmassen sind beispielsweise solche, die Blähgraphit enthalten, wobei weitere das Intumeszenzverhalten unterstützende Hilfsstoffe in diesen Massen enthalten sein können. Übliche Hilfsstoffe sind dem Fachmann bekannt. Erfindungsgemäß werden auch Massen eingesetzt, welche die folgenden Komponenten enthalten:
a) eine phosphorhaltige Stickstoffverbindung,
b) einen Polyalkohol,
c) ein Treibmittel und
d) gegebenenfalls weitere Zusatzstoffe.

Gut geeignete intumeszierende Mischungen im Sinne der Erfindung enthalten als phosphorhaltige Stickstoffverbindung(en) a) Ammonium-, Melamin-, Dimelamin-, Harnstoff-, Dicyandiamid-, Carbamid- und Guanidinphosphate oder deren Mischungen. Bevorzugte Verbindungen a) sind Ammoniumpolyphosphate und Melaminphosphate oder deren Gemische.

Der Gehalt der Komponente a) in der intumeszierenden Mischung beträgt im allgemeinen 2 bis 50 Gew.-%, vorzugsweise 10 bis 40 Gew.-%, bezogen auf die Mischung a) bis d).

Geeignete Polyalkohole b) sind Glycerin, Glycerinprodukte, Trimethylolethan, Trimethylolpropan, Tetraphenylethylenglycol, Di-Trimethylolpropan, 2,2-Dimethylolbutanol, Dipentaerythrit, Tripentaerythrit, EO/PO-Trimethylolpropan, EO/PO-Pentaerythrit, Zucker, Polysaccharide wie Stärke und Cellulose und deren Mischungen.

Bevorzugt sind schwerlösliche mehrwertige Alkohole wie Pentaerythrit, Dipentaerythrit oder deren Gemische.

Der Gehalt der Komponente b) in der intumeszierenden Mischung beträgt im allgemeinen 2 bis 30 Gew.-%, vorzugsweise 5 bis 20 Gew.-%, bezogen auf die Mischung a) bis d).

Geeignete Teibmittel c) sind Melaminderivate wie beispielsweise Melamin, Melamincyanurate, Melaminphosphate, Melaminborate und nieder- und hochmolekulare Polyethylenimine, ferner Harnstoff und Dicyandiamid sowie in der Hitze CO₂ oder Wasser abspaltende Verbindungen wie Carbonsäuren, Dicarbonsäuren, deren Derivate und anorganische Salze wie CaCO₃ und Ammoniumcarbonat.

Bevorzugt sind im Wasser schwerlösliche Stickstoffverbindungen wie Melamin und Melamincyanurat oder deren Gemische.

Der Gehalt der Komponente c) in der intumeszierenden Mischung beträgt im allgemeinen 0 bis 35 Gew.-%, vorzugsweise 2 bis 20 Gew.-%, bezogen auf die Mischung a) bis d).

Es hat sich als vorteilhaft herausgestellt, wenn die intumeszierende Mischung als Komponente d) noch Zusatzstoffe enthält, z.B. blähdruckentwickelnde Stoffe wie Blähgraphit, anorganische Füllstoffe wie Calciumcarbonat, wasserfreisetzende Stoffe wie Aluminiumhydroxyd, Magnesiumhydroxyd, Calciumhydroxid und Bariumhydroxid, vorzugsweise Aluminiumhydroxid oder Magnesiumhydroxid, weiterhin Weichmacher, Verdicker, Verlaufsmittel, Entschäumer, Haftvermittler und insbesondere polymere Bindemittel und rheologische Zusätze.

Weitere geeignete Flammschutzadditive sind beispielsweise Borverbindungen wie Borsäure, Metallborate, Aminoborate und Borane, organische Halogenverbindungen, wie hochchlorierte aliphatische Kohlenwasserstoffe, aliphatische und aromatische Bromverbindungen (z.B. Hexabromcylododecan) und Chlorparaffine, Metallocene, wie Ferrocen, Azidodicarbonsäurediamide, roter Phosphor und organische Phosphorverbindungen, wie chlorhaltige Phosphorpolyole auf Basis oligomerer Phosphorsäureester.

Die Summe der Komponenten d) kann in der vorteilhaften Mischung zu 0 bis 60 Gew.-%, vorzugsweise 0,5 bis 50 Gew.-% enthalten sein, bezogen auf die Mischung a) bis d).

Der Gewichtsanteil aus blähdruckentwickelnder Komponente und anorganischen Füllstoffen oder wasserfreisetzenden Stoffen in der Gesamtmasse der Komponente d) liegt üblicherweise im Bereich von 20 bis 60 Gew.-%, vorzugsweise im Bereich von 30 bis 50 Gew.-%, bezogen auf die Gesamtmasse der Komponente d).

Besonders gut geeignete intumeszierende Mischungen enthalten als Komponente a) Ammoniumpolyphosphat, als Komponente b) Dipentaerythrit, als Komponente c) Dicyandiamid und als Komponente d) Blähgraphit und Aluminiumhydroxid.

Es hat sich gezeigt, daß Blähgraphit allein oder zusammen mit 10 - 30 Gew.-% eines polymeren Bindemittels ebenfalls als intumeszierende Masse im Sinne der Erfindung wirkt. Geeignete polymere Bindemittel sind Polyvinylacetat-, Polycarboxylat- und Polyvinylchlorid-Dispersionen.

Die Mischung der Komponenten kann durch übliches mechanisches Mischen erfolgen.

Die Beschichtung der Profile, Netze oder Gewebe mit den intumeszierenden Massen kann z.B. durch Streichen, Rollen, Rakeln, Spritzen - mittels Druckgasen oder vorzugsweise mittels der Airless-Methode - oder durch Tauchen erfolgen. Um die Witterungsbeständigkeit zu erhöhen, kann auf die Intumeszenzschicht auch eine Deckschicht, z.B. ein Lack, aufgetragen werden.

Eine besonders einfache und wirkungsvolle Möglichkeit des Brandschutzes von Verbundsystemen besteht darin, die Profile, Gewebe oder Netze mit intumeszierenden Klebestreifen zu versehen. Derartige Klebestreifen sind handelsüblich. Besonders geeignet ist der selbstklebend ausgerüstete Streifen Exterdens^{®} F der Firma Dr. Wolman GmbH, da er neben den günstigen brandschutztechnischen Eigenschaften eine ausgeprägte Langzeitstabilität aufweist.

Neben Tränken und Beschichten ist es auch möglich, insbesondere Profile aus intumeszierenden Verbundmaterialien, beispielsweise auf PVC-Basis, herzustellen. Derartige Verbundmaterialien sind in der älteren deutschen Patentanmeldung P 126 20 893.9 beschrieben.

Die Profile, Gewebe oder Netze können auch auf andere Weise mit der intumeszierenden Masse in Kontakt gebracht werden. So können beispielsweise die Schaumstoffplatten zuerst mit einer Intumeszenzmasse beschichtet werden und anschließend das Profil, Gitter oder Netz aufgebracht werden. Im Brandfall kann sich der Intumeszenzschaum dann z.B. mit dem Netz verbinden und auf diese Weise eine stabile Abschottung des Brandherdes bewirken.

Die Verwendung von Profilen, Gewebe oder Netzen, welche mit einer intumeszierenden Masse getränkt oder beschichtet sind, stellt eine wirkungsvolle Möglichkeit des Brandschutzes von schaumstoffhaltigen Verbundsystemen dar.

Besonders bevorzugt sind Verbundsysteme auf Basis eines Glasgittergewebes mit einer Maschenweite von 2 bis 10, insbesondere 3 bis 6 mm und einem Flächengewicht von 50 bis 300, insbesondere 100 bis 200 g/m², das mit 100 bis 400, insbesondere 150 - 300 g/m² einer intumeszierenden Masse getränkt ist, welches
a) eine phosphorhaltige Stickstoffverbindung,
b) einen Polyalkohol,
c) ein Treibmittel und
d) gewünschtenfalls weitere Zusatzstoffe
oder als wirksame Komponente Blähgraphit enthält.

### Beispiele

### Beispiel 1

Eine intumeszierende Mischung aus

| | | |
|---|---|---|
| 43,0 | Gew.-% | Wasser |
| 2,0 | Gew.-% | 1-Methoxypropan-2-ol |
| 0,5 | Gew.-% | ethoxyliertem Alkylphenol (Lutensol^{®} AP9) |
| 0,4 | Gew.-% | Kelzan^{®} S (Hersteller: Lanco, Ritterhude) |
| 10,4 | Gew.-% | Ammoniumpolyphosphat |
| 10,4 | Gew.-% | Melamin |
| 9,8 | Gew.-% | Pentaerythrit |
| 5,4 | Gew.-% | Blähgraphit |
| 18,0 | Gew.-% | Butylacrylat-Styrolcopolymer (Acronal^{®} 290D) |
| 0,1 | Gew.-% | Polysiloxanentschäumer Byk^{®} 033 (Byk-Chemie) |

| | | |
|---|---|---|
| (Gew.-%-Angaben jeweils bezogen auf die Gesamtmasse der Mischung) | | |

wurde auf ein gelochtes 50 mm-Winkelprofil aus Aluminium aufgetragen. Die Auftragsmenge entsprach 400 g/m². Die Löcher des 2 mm dicken Profils hatten einen Durchmesser von 7 mm und waren regelmäßig über die Gesamtfläche verteilt (ca. 1 Loch/cm²).

Drei Schaumstoffblöcke aus expandiertem Polystyrol (EPS) der Maße 500x500x50 mm wurden durch Dübel übereinander an einer Mauer befestigt. Zwischen die EPS-Platten und an den äußeren Begrenzungskanten der EPS-Schicht wurden die beschichteten Winkelprofile befestigt. Die so gebildete Schaumstoffdämmschicht wurde mit einem Armierungsnetz versehen und mit einer Putzschicht abgeschlossen.

Als Simulation eines Brandes an einem Fenstersturz wurde diese Konstruktion von der Unterkante her mit einem Bunsenbrenner beflammt. Die Konstruktion überstand eine 20 minütige Beflammung, ohne daß das Schaummaterial anfing zu brennen.

### Beispiel 2

Ein unbehandeltes Glasfaser-Gittergewebe der Breite 550 mm (Maschenweite 0,4 cm, Gewicht ca. 120 g/m²) wurde mit Hilfe eines Foulard (Spaltbreite 0,7 mm) 2 x mit einer Beschichtung der unten angegebenen Zusammensetzung belegt. Nach jeder Belegung wurde jeweils bei 130°C 5 Minuten getrocknet. Insgesamt wurde so eine Auftragsmenge (fest) von 250 g/m² erreicht.

### Zusammensetzung

| | | |
|---|---|---|
| 41,36 | Gew.-% | Polyvinylacetatdispersion (wäßrig, 50 gew.-%ig, Vinofan^{®} V 800, BASF AG) |
| 18,61 | Gew.-% | Wasser |
| 0,60 | Gew.-% | Netzmittel, Lumiten^{®} IRA (BASF AG) |
| 0,10 | Gew.-% | Polysiloxanentschäumer, Byk^{®} 031 (Byk-Chemie) |
| 4,20 | Gew.-% | Isodecyldiphenylphosphat, Santicizer^{®} 148 (Monsanto GmbH) |
| 12,90 | Gew.-% | Ammoniumpolyphosphat, Hostaflam^{®} AP 422 (Hoechst AG) |
| 9,40 | Gew.-% | Dicyandiamid |
| 7,80 | Gew.-% | Dipentaerythrit |
| 5,03 | Gew.-% | Blähgraphit, blähfähiger Naturgraphit C-Gehalt > 96 %, Blähvolumen 200-230 cm³/g, Expan^{®} MBS (Tropag O. Ritter Nachf. GmbH) |

Aus der so gefertigten Netzbahn wurden 20 x 20 cm große Abschnitte abgetrennt und wannenförmig um die Schmalseite einer Styropor^{®} F 215 Platte der Maße 20 x 20 x 5 cm gelegt. Die Befestigung erfolgte durch Auftragen (4-4,5 kg/m²) eines Armierungsputzes (Sto REP^{®}).

Nach dem Abbinden des Putzes wurde die Schmalseite des Styroporblocks mit einem Bunsenbrenner (Abstand Oberkante Bunsenbrenner-Styroporplatte: 14 cm) von unten beflammt. Dabei sammelte sich schmelzendes Polystyrol auf dem intumeszierenden Gitter und bildete zusammen mit dem Thermoschaum in wenigen Sekunden eine brandhemmende Kruste, die als Brandsperre ein weiteres Schmelzen oder Brennen der EPS-Platte verhinderte. Der Versuch wurde nach 5 Minuten abgebrochen. Bis dahin war etwa 1/4 der EPS-Platte geschmolzen.

### Beispiel 3

Nach dem Versuchsaufbau aus Beispiel 2 wurde eine Intumeszenzmasse geprüft, die auf ein handelsübliches Glasfasergittergewebe (Vitrulan^{®}, Typ SD 4423 G/55, Maschenöffnung 3,0 x 3,0 mm, Gewicht ca. 165 g/m²) aufgebracht war (ca. 250-290 g/m²). Die Masse hatte folgende Zusammensetzung:

| | | |
|---|---|---|
| 46,00 | Gew.-% | Wasser |
| 2,00 | Ges.-% | 1-Methoxypropanol-2 |
| 0,50 | Gew.-% | Netzmittel, ethoxyliertes Alkylphenol, Lutensol^{®} AP 9 (BASF AG) |
| 0,40 | Gew.-% | Polysaccharidverdicker, Kelzan^{®} S (Lanco, Ritterhude) |
| 12,30 | Ges.-% | Ammoniumpolyphosphat, Hostaflam^{®} AP 422 (Hoechst AG) |
| 11,40 | Gew.-% | Dipentaerythrit |
| 12,30 | Gew.-% | Dicyandiamid |
| 15,00 | Gew.-% | Methylphenylsiliconharz, Silres^{®} MP 42 E (Wacker Chemie GmbH, München |
| 0,10 | Gew.-% | Polysiloxanentschäumer, Byk^{®} 033 (Byk-Chemie) |

Durch die Intumeszenzmasse wurde eine wirksame Brandsperre erreicht.

### Beispiel 4

Analog zu Beispiel 3 wurde folgende Intumeszenzmasse verwendet:

| | | |
|---|---|---|
| 22,50 | Gew.-% | Trikresylphosphat, Disflamoll^{®} TKP (Bayer AG) |
| 2,00 | Gew.-% | 1-Methoxypropanol-2 Aluminiumhydroxide, |
| 16,96 | Gew.-% | Apyral^{®} 1 |
| 12,19 | Gew.-% | Apyral^{®} 15 (VAW-Vereinigte Aluminium Werke AG) |
| 12,19 | Gew.-% | Apyral^{®} 25 |
| 1,06 | Gew.-% | Zinkborat |
| 10,60 | Gew.-% | Blähgraphit, blähfähiger Naturgraphit C-Gehalt > 95 % (LUH - Georg Luh GmbH, Walluf) |
| 22,50 | Gew.-% | PVC-Harz, Vinolit^{®} P 4472 (Vinolit-Kunststoff GmbH) |

Durch die Intumeszenzmasse wurde eine wirksame Brandsperre erreicht.

### Beispiel 5

Analog zu Beispiel 3 wurde folgende Intumeszenzmasse verwendet:

| | | |
|---|---|---|
| 24,40 | Gew.-% | Wasser |
| 1,00 | Gew.-% | 1-Methoxypropanol-2, Solvenon^{®} PM (BASF AG) |
| 0,20 | Gew.-% | Netzmittel, ethoxyliertes Alkylphenol, Lutensol^{®} AP 9 (BASF AG) |
| 0,30 | Gew.-% | Polysaccharidverdicker, Kelzan^{®} S (Lanco, Ritterhude) |
| 15,00 | Gew.-% | Ammoniumpolyphosphat, Hostaflam^{®} AP 422 (Hoechst AG) |
| 15,00 | Gew.-% | Melamin |
| 14,00 | Gew.-% | Pentaerythrit |
| 8,00 | Gew.-% | Blähgraphit, blähfähiger Naturgraphit, C-Gehalt > 95 % Expan^{®} MBS (Tropag; O. Ritter Nachf. GmbH |
| 22,00 | Gew.-% | Butadien-Styrol-Copolymerdispersion, Styrofan^{®} LD 421 (BASF AG) |
| 0,10 | Gew.-% | Polysiloxanentschäumer, Byk^{®} 033 (Byk-Chemie) |

Mit diesem intumeszierenden System wurden ähnliche Ergebnisse erhalten wie in den Beispielen 3 und 4.

In allen Fällen konnte die Eignung als Brandsperre unter Beweis gestellt werden.

### Beispiel 6

In Anlehnung an DIN 4102, Teil 1, 4./3 wurde die Wirksamkeit eines erfindungsgemäßen mit Intumeszenzbeschichtung versehenen Glasfasergewebes als Brandsperre in einem Wärmedämmverbundsystem (WDVS) der Maße 3,50 x 1,25 x 0,15 m geprüft.

Als Untergrund wurden senkrecht stehende Kalziumsilikatplatten (Promatect^{®}-Platten) der Stärke 10 mm verwendet. Der gewählte Aufbau entspricht einem 3 Komponentenaufbau für WDVS-Systeme.

Der Aufbau der WDVS beginnt ca. 50 cm über dem Boden.

### Beispiel 6a (Brandsperre im Bodenbereich des WDVS, U-förmig)

Die Promatect^{®}-Trägerplatte wurde mit Sto-Putzgrund^{®} vorgestrichen. Anschließend wurde ca. 3,5-4,0 kg Sto-Bentonspachtel^{®} A, dem 20 % Zement P 235 zugemischt wurde, mit der Traufel aufgetragen. Die zugeschnittenen EPS-Platten der Abmessung 1,250 x 0,500 x 0,15 m vom Typ Styropor^{®} F 215 (20 g/l) wurden in den Betonspachtel eingedrückt. Auftretende Unebenheiten wurden plan geschliffen. Zusammen mit der untersten EPS-Platte wurde ein beschichtetes Glasfasergewebe nach Beispiel 2 der Maße 1700 x 550 mm als Brandsperre so in das WDVS eingearbeitet, daß es die untere Schmalseite der EPS-Platte wannenförmig (U-förmig) umschloß.

Auf die EPS-Platten wurde ein Armierungsputz der Fa. Sto (Sto REP^{®}) aufgetragen, die Seitenteile wurden ebenfalls mit dem Spachtel verputzt, so daß das gesamte WDV-System der Maße 3500 x 1250 mm vollständig eingekleidet war. Auftragsmenge ca. 4-4,5 kg/m².

Nach dem Auftragen des Armierungsspachtels wurde ein Sto-Glasfasergewebe (Gewicht ca. 150 g/m²) eingebettet und mit der Traufel eingepreßt.

### Beispiel 6b (Brandsperre in 50 cm Höhe des WDVS, S-förmig)

Der Aufbau erfolgte analog Beispiel 6a mit folgender Abweichung: Zwischen den beiden unteren EPS-Platten wurde ein Glasfasergewebe nach Beispiel 4 der Maße 1700 x 550 mm als Brandsperre so eingearbeitet, daß es den Stoß beider Platten S-förmig umschloß.

Beide Prüfkörper (Beispiel 6a und 6b) wurden mit Putzgrund der Fa. Sto (Sto Primer^{®}) vorgestrichen. Der Auftrag betrug 50-100 g/m². Abschließend wurde ein weißer synthetischer Kratzputz der Fa. Sto (Stolit Kratz K2^{®}) aufgetragen und mit der Traufel verarbeitet Auftrag ca. 3-4 kg/m²).

Als Zündquelle für die Brandversuche wurde eine Kiefernholz-Krippe mit einem Gewicht von 25,0 kg (nach Gewichtskonstanz) verwendet. Die einzelnen Kiefernholzstücke der Maße 4 x 4 x 50 cm wurden im Abstand von 4 cm zu einem Würfel gestapelt. Insgesamt ergaben sich ca. 14 Lagen. Die Konditionierung erfolgte bei Normalklima 8 Tage).

Beim Abbrand der Holzkrippe wurden im unteren Bereich des Prüfkörpers Temperaturen zwischen 800 - 950°C gemessen. In 3 m Höhe lagen die Temperaturen bei max. Intensität zwischen 350 - 450°C.

### Brandversuch nach Aufbau 6a

Nach ca. 11-12 Min. wurde kurzzeitig brennend abtropfendes EPS aus dem Bodenbereich des Prüfkörpers beobachtet. Nach Ablauf einer weiteren Minute war dieser Vorgang beendet und der Prüfkörperboden abgedichtet. Das vollständig zugeschäumte Gewebe verhinderte den weiteren Austritt von geschmolzenem EPS.

### Brandversuch nach Aufbau 6b

### (Brandsperre in 50 cm Höhe des WDVS S-förmig eingeputzt)

Der Versuchsaufbau entspricht dem Fassadenbereich der durch Fenster, Balkone oder Rollädenkästen das Einputzen des Brandschutzgewebes in den Bodenbereich des WDVS nicht möglich macht.

Bei dem Brandversuch wurden deutlich stärkere Flammenintensitäten erreicht. Nach ca. 17 Min. trat Selbstverlöschung ein.

### Beispiel 7

### Sandwichelemente

Es wurden 2 Sandwichelemente aus expandiertem Polystyrol (EPS) (20 g/l) der Dicke von ca. 100 mm mit beiderseitiger Blechabdekkung (Dicke 0,5 mm) hergestellt. Die Länge und Breite der Elemente betrug jeweils 530 mm.

Bei beiden Elementen wurde die Verbindung des EPS mit den Blechen durch Verkleben mit einem handelsüblichen Polyurethan-Kleber erreicht (Auftragsmenge 100 g/m²).

Während beim ersten nicht erfindungsgemäßen Element das Verkleben ohne Netzeinlage erfolgte, wurde beim zweiten Element auf beiden Seiten des EPS ein mit Intumeszenzmaterial nach Beispiel 2 beschichtetes Glasfasergewebe (der Abmessung 530 x 530 mm) in den Kleber eingelegt.

Nach 31 Tagen Klimalagerung bei Normalklima (DIN 50 014) wurden beide Elemente im Brandversuchsstand nach DIN 4102, Teil 8 (Mai 1986) mit Beflammung nach DIN 4102, Teil 2 (Juni 1986) geprüft. Auf der nicht beflammten Seite der Elemente wurden jeweils 2 Temperaturfühler angebracht. Der erste Temperaturfühler wurde an der diagonalen Probenmitte befestigt, der zweite 10 cm horizontal daneben. Tabelle 1 zeigt den Temperaturverlauf an den Meßstellen (Mittelwert).

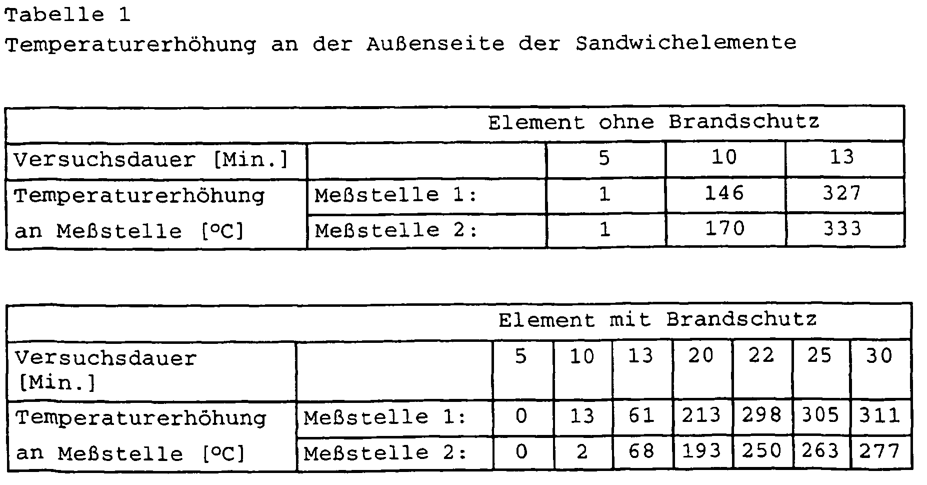

Die Temperatur der Probekörper bei Versuchsbeginn betrug 27°C.

Der Versuch mit dem Element ohne Brandschutzausrüstung wurde bereits nach 13 Minuten abgebrochen, da sich das außenliegende Blech stark verformte. Das erfindungsgemäß mit Brandschutz versehene Element zeigte eine deutlich verzögerte Temperaturerhöhung im Vergleich zum Element ohne Brandschztzausrüstung.

## Patentansprüche

1. Brandgeschützte Verbundsysteme, enthaltend Schaumstoffplatten aus geschäumtem Polystyrol oder geschäumtem Polyurethan zwischen zwei Begrenzungsflächen, wobei Profile, Gewebe oder Netze in die Fugen zwischen den Schaumstoffplatten eingebracht sind, welche mit einer intumeszierenden Masse, die Blähgraphit oder die folgenden Komponenten
a) eine phosphorhaltige Stickstoffverbindung,
b) einen Polyalkohol,
c) ein Treibmittel und
d) gewünschtenfalls weitere Zusatzstoffe.
enthält, getränkt oder beschichtet sind.

2. Brandgeschützte Verbundsysteme nach Anspruch 1 als Wärmedämmverbundsysteme im Gebäudebau.

3. Brandgeschützte Verbundsysteme nach Anspruch 1 im Fahrzeugbau.

4. Brandgeschützte Verbundsysteme nach Anspruch 2, in denen Armierungsnetze oder -gewebe zur Stabilisierung einer als Begrenzungsfläche wirkenden Putzschicht mit einer intumeszierenden Masse getränkt oder beschichtet sind.

5. Brandgeschützte Verbundsysteme nach einem der Ansprüche 1 bis 4, **dadurch gekennzeichnet, dass** als Gewebe Glasgittergewebe mit einer Maschenweite von 2 bis 10 mm und einem Flächengewicht von 80 bis 250 g/_{M}², die mit 100 bis 400 g/m² einer intumeszierenden Masse getränkt sind, eingesetzt sind.

6. Verfahren zum Brandschutz von Verbundsystemen gemäß den Ansprüchen 1 bis 5, **dadurch gekennzeichnet, dass** man Profile, Gewebe oder Netze zwischen den Schaumstoffplatten einbringt, welche mit einer intumeszierenden Masse nach Anspruch 1 getränkt oder beschichtet sind.

## Claims

1. A fire-resistant composite system comprising foam boards cosisting of foamed polystyrene or foamed polyurethane between two boundary surfaces, profiles, woven fabric or netting being introduced into the joints between the foam boards, which profiles, woven fabric or netting are impregnated or coated with an intumescent composition which comprises expanded graphite or the following components
a) a phosphorus-containing nitrogen compound,
b) a polyalcohol,
c) a blowing agent and
d) if desired, further additives.

2. The fire-resistant composite system according to claim 1 as a composite thermal insulation system in the construction of buildings.

3. The fire-resistant composite system according to claim 1 in vehicle construction.

4. The fire-resistant composite system according to claim 2 in which reinforcing netting or woven fabrics for stabilizing a layer of render which acts as a boundary surface are impregnated or coated with an intumescent composition.

5. The fire resistant composite system according to any of claims 1 to 4, wherein glass lattice fabrics having a mesh size of from 2 to 10 mm and a basis weight of from 80 to 250 g/m², which are impregnated with 100 to 400 g/m² of an intumescent composition, are used as woven fabrics.

6. A method of fireproofing composite systems according to any of claims 1 to 5, which comprises introducing between the foam boards profiles, woven fabrics or netting which are impregnated or coated with an intumescent composition according to claim 1.

## Revendications

1. Systèmes composites ignifuges, contenant des plaques de mousse en polystyrène moussé ou polyuréthanne moussé entre deux surfaces imitatrices, des profilés, des tissus ou des réseaux, qui sont imprégnés ou revêtus avec une masse intumescente qui contient du graphite expansé ou les composants suivants :
a) un composé d'azote contenant du phosphore,
b) un polyalcool,
c) un agent gonflant et
d) éventuellement des additifs supplémentaires,
étant introduits dans les joints entre les plaques de mousse.

2. Systèmes composites ignifuges selon la revendication 1 en tant que systèmes composites isolants thermiques dans la construction d'immeubles.

3. Systèmes composites ignifuges selon la revendication 1 dans la construction de véhicules.

4. Systèmes composites ignifuges selon la revendication 2, dans lesquels des réseaux ou tissus d'armature, pour la stabilisation d'une couche d'enduit agissant en tant que surface limitatrice, sont imprégnés ou revêtus avec une masse intumescente.

5. Systèmes composites ignifuges selon l'une quelconque des revendications 1 à 4, **caractérisés en ce que** des tissus en maille de verre ayant une largeur de maille de 2 à 10 mm et un poids superficiel de 80 à 250 g/m², qui sont imprégnés avec 100 à 400 g/m² d'une masse intumescente, sont utilisés en tant que tissus.

6. Procédé de protection contre l'incendie de systèmes composites selon les revendications 1 à 5, **caractérisé en ce que** des profilés, des tissus ou des réseaux, qui sont imprégnés ou revêtus avec une masse intumescente selon la revendication 1, sont introduits entre les plaques de mousse.
